# EUROPEAN PATENT APPLICATION

(11) **EP 4 790 314 A1**
(43) Date of publication of application: **12.08.2026**
(21) Application number: 26155202.0
(22) Date of filing: 30.01.2026
(51) Int. Cl.: F21V 8/00, G02B 27/00

(54) **OPTICAL APPARATUS, MODULES AND DEVICES**

(30) Priority: 11.02.2025 GB 202501998
(71) Applicant: Nokia Technologies Oy, 02610 Espoo (FI)
(72) Inventor: SALMIMAA, Marja Pauliina, Tampere (FI); JÄRVENPÄÄ, Toni Johan, Akaa (FI)
(74) Representative: Nokia EPO representatives

(57) **Abstract**

Examples of the disclosure relate to optical apparatus. The apparatus comprises a light guide comprising a first layer, a second layer, and an interface between the layers. The first layer comprises a first incoupler configured to in-couple light of a first wavelength range into the first layer and a first outcoupler configured to out-couple the light of the first wavelength range. The second layer comprises a second incoupler configured to in-couple light of a second wavelength range into the second layer and a second outcoupler configured to out-couple the light of the second wavelength range. The interface is arranged to retain light of the first wavelength range in the first layer and to retain light of the second wavelength range in the second layer and to allow light of a third wavelength range to pass through the interface and travel through both the first layer and the second layer.

## Description

### TECHNOLOGICAL FIELD

Examples of the disclosure relate to optical apparatus, modules and devices. Some relate to optical apparatus, modules and devices for providing a uniform output for different wavelengths of light.

### BACKGROUND

Optical apparatus, such as exit pupil expanders, can be used in display systems and devices such as near eye displays, augmented and/or virtual reality headsets and head up displays for example. Colour uniformity can be difficult to achieve in such devices.

### BRIEF SUMMARY

According to various, but not necessarily all, examples of the disclosure there is provided an apparatus comprising:
a light guide, the light guide comprising at least a first layer and a second layer and an interface between the first layer and the second layer wherein;
the first layer of the light guide comprises a first incoupler configured to in-couple one or more input beams of light of a first wavelength range into the first layer and a first outcoupler configured to out-couple the one or more input beams of light of the first wavelength range from the light guide;
the second layer of the light guide comprises a second incoupler configured to in-couple one or more input beams of light of a second wavelength range into the second layer and a second outcoupler configured to out-couple the one or more input beams of light of the second wavelength range from the light guide; and
the interface between the first layer and the second layer is arranged to retain light of the first wavelength range in the first layer and to retain light of the second wavelength range in the second layer and to allow light of a third wavelength range to pass through the interface and travel through both the first layer and the second layer.

The first incoupler may be configured to in-couple one or more input beams of light of the third wavelength range into the first layer.

The second incoupler may be configured to in-couple one or more input beams of light of the third wavelength range into the second layer.

The second incoupler may be switchable between an on state and off state wherein in the on state the second incoupler is configured to in-couple one or more input beams of light of the third wavelength range into the second layer and in the off state the second incoupler is not configured to in-couple one or more input beams of light of the third wavelength range into the second layer.

The first incoupler may be switchable between an on state and off state wherein in the on state the first incoupler is configured to in-couple one or more input beams of light of the third wavelength range into the first layer and in the off state the first incoupler is not configured to in-couple one or more input beams of light of the third wavelength range into the first layer.

The second outcoupler may be configured to out-couple one or more input beams of light of the third wavelength range from the light guide.

Dichroic reflector material may be provided before the first outcoupler to reflect light of the third wavelength range.

The interface may comprise a thin film with a refractive index that is lower than the refractive index of the first layer and the refractive index of the second layer.

The thin film may be arranged, for light travelling from the first layer towards the second layer, to reflect light of the first wavelength range and first reflection angle and allow light of the second wavelength range and second reflection angle to pass through and the thin film is arranged, for light travelling from the second layer towards the first layer, to reflect light of the second wavelength range and second reflection angle.

The thin film may be arranged, for light travelling from the first layer towards the second layer, to allow light of the third wavelength range and third reflection angle to pass through and for light travelling from the second layer towards the first layer, to allow light of the third wavelength range and third reflection angle to pass through.

The second incoupler may be displaced relative to the first incoupler so that at least part of the second incoupler does not overlap with the first incoupler.

The second incoupler may have a different orientation compared to the first incoupler.

The first layer may comprise a first expander between the first incoupler and the first outcoupler where the first expander is configured to expand one or more incoupled beams of light of the first wavelength range and the second layer comprises a second expander between the second incoupler and the second outcoupler where the second expander is configured to expand one or more incoupled beams of light of the second wavelength range.

The second expander may be configured to expand one or more incoupled beams of light of the third wavelength range.

Wavelengths in the second wavelength range may be shorter than the wavelengths in the first wavelength range.

Wavelengths in the third wavelength range may be shorter than the wavelengths in the second wavelength range.

According to various, but not necessarily all, embodiments there may be provided a module, a device, a headset, a vehicle or cab for a vehicle comprising an apparatus as described herein.

According to various, but not necessarily all, embodiments there is provided an apparatus comprising:
at least one processor; and
at least one memory including computer program code;
the at least one memory storing instructions that, when executed by the at least one processor, cause the apparatus to perform at least a part of one or more methods described herein.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or instructions as desired, and as appropriate. The description of a function should additionally be considered to also disclose any means suitable for performing that function

### BRIEF DESCRIPTION

Some examples will now be described with reference to the accompanying drawings in which:
FIG. 1 shows an example apparatus;
FIGS. 2A and 2B show light paths through an apparatus and relative brightness levels;
FIGS. 3A and 3B show light paths through an apparatus and relative brightness levels;
FIGS. 4A to 4D show light paths through an apparatus and relative brightness levels;
FIGS. 5A and 5B show light paths through an apparatus and relative brightness levels;
FIGS. 6A and 6B show a cross section of an apparatus and a transmission curve for a dichroic reflector;
FIG. 7 shows an example apparatus;
FIG. 8 shows an example of splitting an input beam of light; and
FIGS. 9A and 9B show example head up displays comprising an apparatus.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DETAILED DESCRIPTION

Optical apparatus comprising diffractive optics can be used in devices such as mediated reality headsets or vehicular displays. In an ideal light guiding apparatus the output would have uniform brightness for different wavelengths of light. This can be difficult to achieve in practice.

Examples of the disclosure provide optical apparatus comprising a light guide that address these issues.

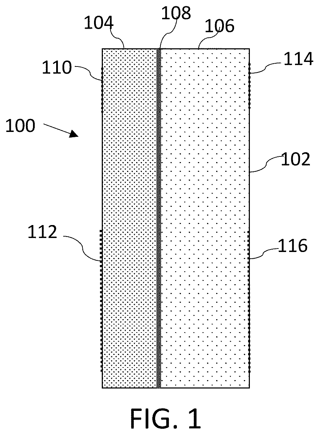

Fig. 1 shows a cross section of an example apparatus 100. The apparatus 100 could be provided in a module, a device, a headset, a vehicle or cab for a vehicle or for any other suitable use.

The apparatus comprises a light guide 102. The light guide 102 is arranged to enable light to be guided through the light guide 102 via internal reflections. The light guide 102 can comprise any suitable material, or combinations of materials, that is sufficiently transparent to light of appropriate wavelength ranges.

In this example the light guide 102 comprises an exit pupil expander. The exit pupil expander is configured to replicate an exit pupil from an optical engine or other optical arrangement. The optical engine could be a display means such as a light engine, projection engine, or a picture generating unit.

The light guide 102 comprises at least a first layer 104 and a second layer 106. The first layer 104 is provided overlaying the second layer 106 in a stacked arrangement.

The respective layers 104, 106 can be planar or substantially planar. The respective layers 104, 106 can be arranged to expand an exit pupil in two dimensions.

The respective layers 104, 106 are arranged to enable light to be guided through the light guiding member 102 via internal reflections. The materials and optical properties of the layers 104, 106 can be selected to enable light to be guided through the light guiding member 102.

In the example of Fig. 1 the light guide 102 comprises two layers. The light guide 102 can comprise other numbers of layers in other examples however, having only two layers 104, 106 can make the apparatus 100 simpler and cheaper to manufacture. The first layer 104 and the second layer 106 can have different thicknesses or can have the same thickness. The first layer 104 and the second layer 106 can comprise different materials or the same materials. Where the layers 104, 106 have different materials the materials can have different optical properties such as refractive index. The different thicknesses and/or optical properties can be selected to support total internal reflection of respective wavelength ranges of light within the light guide 102.

The first layer 104 of the light guide 102 comprises a first incoupler 110. The first incoupler 110 is configured to in-couple one or more input beams of light of a first wavelength range into the first layer 104.

The first layer 104 of the light guide 102 also comprises first outcoupler 112. The first outcoupler 112 is configured to out-couple the one or more input beams of light of the first wavelength range from the light guide 102. The first outcoupler 112 is configured to out-couple the one or more input beams of light of the first wavelength range from the first layer 104 of the light guide 102.

The second layer 106 of the light guide 102 comprises a second incoupler 114. The second incoupler 114 is configured to in-couple one or more input beams of light of a second wavelength range into the second layer 106.

The second layer 106 of the light guide 102 also comprises a second outcoupler 116. The second outcoupler 116 is configured to out-couple the one or more input beams of light of the second wavelength range from the light guide 102. The second outcoupler 116 is configured to out-couple the one or more input beams of light of the second wavelength range from the second layer 106 of light guide 102.

Wavelengths in the second range are shorter than the wavelengths in the first wavelength range. For example, the first wavelength range could comprise visible red light and the second wavelength range could comprise visible green light. The one or more input beams of light are not shown in Fig. 1 for clarity.

In some examples the layers 104, 106 can also comprise at least one expander between the incoupler 110, 114 and the outcoupler 112, 116. For instance, the first layer 104 can comprise a first expander between the first incoupler 110 and the first outcoupler 112 where the first expander is configured to expand light of the first wavelength range. Similarly, the second layer 106 can comprise a second expander between the second incoupler 114 and the second outcoupler 116 where the second expander is configured to expand light of the second wavelength range. In some examples the second expander can be configured to expand light of a third wavelength range. The expanders can be configured to expand the in-coupled beams of light. The expanders can be configured to expand the in-coupled beams of light in two dimensions. The expanders can be diffractive or semi-reflective. The expanders can be transmissive or reflective.

The incouplers 110, 114 outcouplers 112, 116 and/or expanders can comprise diffractive means. The diffractive means can comprise any means that can be configured to diffract the input beams of light. The diffractive means can comprise any one or more of a diffractive optical element, diffractive structure, diffraction gratings, holographic gratings, Bragg gratings, rulings, ridges, surface relief diffractive gratings or any suitable optical component or feature having a periodic structure that splits and diffracts light into several beams travelling in different directions.

In the example of Fig. 1 the second incoupler 114 is shown overlapping with the first incoupler 110. In some examples the second incoupler 114 can be displaced relative to the first incoupler 110 so that at least part of the second incoupler 114 does not overlap with the first incoupler 110.

In some examples the second incoupler 114 can have a different orientation compared to the first incoupler 110. For instance, the gratings of the second incoupler 114 could be perpendicular, or substantially perpendicular, to the gratings of the first incoupler 110.

The interface 108 between the first layer 104 and the second layer 106 is arranged to retain light of the first wavelength range in the first layer 104 and to retain light of the second wavelength range in the second layer 106. For example, the interface 108 can be arranged to reflect in-coupled light of the first wavelength range and in-coupled light of the second wavelength range.

The interface can comprise a thin film with a refractive index that is lower than the refractive index of the first layer 104 and the refractive index of the second layer 106.

The thin film is arranged, for light travelling from the first layer 104 towards the second layer 106, to reflect light of the first wavelength range and first reflection angle and allow light of the second wavelength range and second reflection angle to pass through. The thin film can also be arranged, for light travelling from the second layer 106 towards the first layer 104, to reflect light of the second wavelength range and second reflection angle. This means that light of the first wavelength range predominantly follows a path through the first layer 104 and light of the second wavelength range predominantly follows a path through the second layer 106.

The interface 108 also allows light of a third wavelength range to pass through the interface and travel through both the first layer 104 and the second layer 106. Wavelengths in the third wavelength range are shorter than the wavelengths in the second wavelength range. For example, the third wavelength range could comprise visible blue light.

In examples where the interface 108 comprises a thin film the thin film can be arranged, for light travelling from the first layer 104 towards the second layer 106, to allow light of a third wavelength range and third reflection angle to pass through and for light travelling from the second layer 106 towards the first layer 104, to allow light of a third wavelength range and third reflection angle to pass through.

In some examples the first incoupler 110 can be configured to in-couple one or more input beams of light of the third wavelength range into the first layer 104. In some examples the second incoupler 114 can be configured to in-couple one or more input beams of light of a third wavelength range into the second layer 106. In some examples both the first incoupler 110 and the second incoupler 114 can be configured to in-couple light of the third wavelength range. In other examples, only one of the first incoupler 110 and the second incoupler 114 can be configured to in-couple light of the third wavelength range.

In some examples one or both of the incouplers 110, 114 can be switchable. For instance, the first incoupler 110 can be switchable between an on state and off state. When the first incoupler 110 is in the on state the first incoupler 110 is configured to in-couple one or more input beams of light of a third wavelength range into the first layer 104. When the first incoupler 110 is in the off state the first incoupler 110 is not configured to in-couple one or more input beams of light of a third wavelength range into the first layer 104. In some examples the second incoupler 114 can be switchable between an on state and off state. When the second incoupler 114 is in the on state the second incoupler 114 is configured to in-couple one or more input beams of light of a third wavelength range into the second layer 106. When the second incoupler 114 is in the off state the second incoupler 114 is not configured to in-couple one or more input beams of light of a third wavelength range into the second layer 106.

In some examples the second outcoupler 116 can be configured to out-couple one or more incoupled beams of light of the third wavelength range from the light guide 102. The second outcoupler 116 can be configured to out-couple one or more incoupled beams of light of the third wavelength range from the second layer 106 of the light guide 102. In some cases the first outcoupler 112 can have negligible out-coupling of incoupled beams of light of the third wavelength range from the light guide 102. In some cases a dichroic reflector material can be provided before the first outcoupler 112 to reflect light of the third wavelength range.

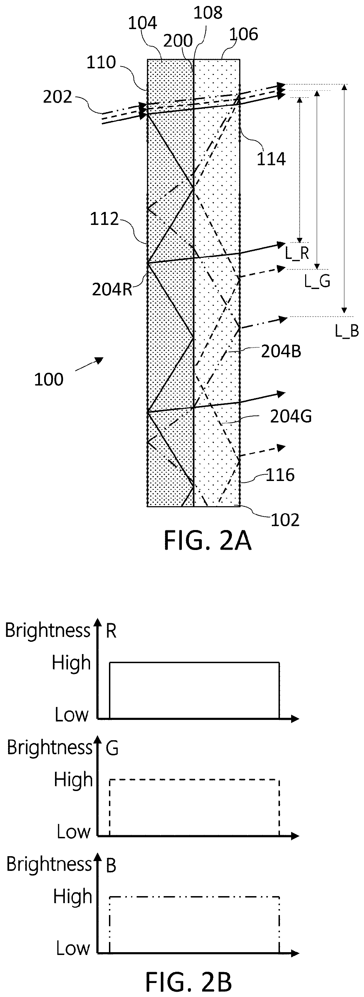

Figs. 2A and 2B show light paths through an example apparatus 100 for light of different wavelength ranges and plots of relative brightness levels for the respective different wavelength ranges.

A cross section of an example apparatus 100 is shown in Fig. 2A. The apparatus 100 comprises a first layer 104 comprising a first incoupler 110 and a first outcoupler 112 and second layer 106 comprising a second incoupler 114 and a second outcoupler 116. The layers 104, 106 and the respective incouplers 110,114 and outcouplers 112,116 can be arranged as shown in Fig. 1. Corresponding reference numerals are used for corresponding features.

In the examples of Fig. 2A a thin film 200 can be provided in the interface 108 between the first layer 104 and the second layer 106. The thin film 200 can have a refractive index that is lower than the refractive index of the first layer 104 and the refractive index of the second layer 106. The thin film 200 enables the interface 108 to be configured to retain light of the first wavelength range in the first layer 104 and to retain light of the second wavelength range in the second layer 106.

Fig. 2A shows some example light paths of in-coupled light of different wavelength ranges. In the example of Fig. 2A the input light 202 can comprise light of three different wavelength ranges. The first wavelength range can comprise predominantly red light, the second wavelength range can comprise predominantly green light, and the third wavelength range can comprise predominantly blue light. The input light 202 can be received from an optical engine or other optical arrangement or any other suitable source.

The first incoupler 110 can be arranged for in-coupling light of the first wavelength range. Any suitable parameters of the first incoupler 110 can be optimized, or substantially optimized, for the in-coupling of light of the first wavelength range. For example the period of the diffractive grating, the fill ratio of the diffractive grating, the area of the diffractive grating and/or any other suitable parameter or combination of parameters can be arranged for in-coupling light of the first wavelength range.

Therefore, as shown in Fig. 2A the light of the first wavelength range is in-coupled into the first layer 104 by the first incoupler 110. The low refractive index of the thin film 200 can create the conditions for total internal reflection of the in-coupled light of the first wavelength range 204R. When the in-coupled light of the first wavelength range 204R is incident on the thin film 200 at the interface 108 it is reflected back to the first layer 104. The in-coupled light of the first wavelength range 204R does not pass into the second layer 106. The in-coupled light of the first wavelength range 204R travels through the first layer 104 until it is outcoupled from the light guide 102 by the first outcoupler 112.

The second incoupler 114 can be arranged for in-coupling light of the second wavelength range. Any suitable parameters of the second incoupler 114 can be optimized, or substantially optimized, for the in-coupling of light of the second wavelength range. For example, the period of the diffractive grating, the fill ratio of the diffractive grating, the area of the diffractive grating and/or any other suitable parameter or combination of parameters can be arranged for in-coupling light of the second wavelength range.

Therefore, as shown in Fig. 2A the light of the second wavelength range is in-coupled into the second layer 106 by the second incoupler 114. The low refractive index of the thin film 200 can create the conditions for total internal reflection of the in-coupled light of the second wavelength range 204G. When the in-coupled light of the second wavelength range 204G is incident on the thin film 200 at the interface 108 it is reflected back to the second layer 106. The in-coupled light of the second wavelength range 204G does not pass back into the first layer 104. The in-coupled light of the second wavelength range 204G travels through the second layer 106 until it is outcoupled from the light guide 102 by the second outcoupler 116.

Either one of, or both of, the incouplers 110, 114 can be arranged for in-coupling light of the third wavelength range. In the example of Fig. 2A the light of the third wavelength range is predominantly in-coupled by the second incoupler 114. As shown in Fig. 2A the light of the third wavelength range is in-coupled into the second layer 106 by the second incoupler 114. When the in-coupled light of the third wavelength range 204B is incident on the thin film 200 at the interface 108 it passes through the interface 108.

The in-coupled light of the third wavelength range 204B undergoes total internal reflection at the surface of the first layer 104 and is reflected back towards the interface 108. When the reflected light of the third wavelength range 204B is incident on the thin film 200 at the interface 108 is passes through the interface 108 back into the second layer 106. Therefore, the in-coupled light of the third wavelength range 204B can pass through between the first layer 104 and the second layer 106.

The in-coupled light of the third wavelength range 204B travels through both the first layer 104 and the second layer 106 until it is outcoupled from the light guide 102 by the second outcoupler 116.

The total internal reflection lengths for the respective wavelength ranges of light are shown in Fig. 2A. The total internal reflection length is the distance between consecutive total internal reflections on one surface of the light guide 102. The total internal reflection length for the in-coupled light is determined, at least in part, by the thickness of layers 104, 106 of the light guide 102 that the light travels through.

The in-coupled light of the first wavelength range 204R remains in the first layer 104 and has total internal reflection length L_R. The in-coupled light of the second wavelength range 204G remains in the second layer 106 and has total internal reflection length L_G. The in-coupled light of the third wavelength range 204B travels through both the first layer 104 the second layer 106 and has total internal reflection length L_B.

In this example the total internal reflection length L_R of the first wavelength range is shorter than total internal reflection length L_G of the second wavelength range. Also the total internal reflection length L_G of the second wavelength range is shorter than total internal reflection length L_B of the third wavelength range. That is: $L_R < L_G < L_B$

The properties of the layers 104, 106 can be selected to provide appropriate total internal reflection lengths for the respective wavelengths of light. For example, the thickness of the first layer 104 can be selected to provide an appropriate total internal reflection length L_R of the first wavelength range and the thickness of the second layer 106 can be selected to provide an appropriate total internal reflection length L_G of the second wavelength range. Any appropriate adjustments could then be made to the apparatus 100 or the design of the apparatus 100 to provide an appropriate total internal reflection length L_B of the third wavelength range.

Fig. 2B shows the respective brightness levels for different wavelength ranges for the example apparatus shown in Fig. 2A. The first plot shows the brightness level for the first wavelength range, the second plot shows the brightness level for the second wavelength range, and the third plot shows the brightness level for the third wavelength range. For each of the wavelength ranges the brightness level is uniform or substantially uniform across the output.

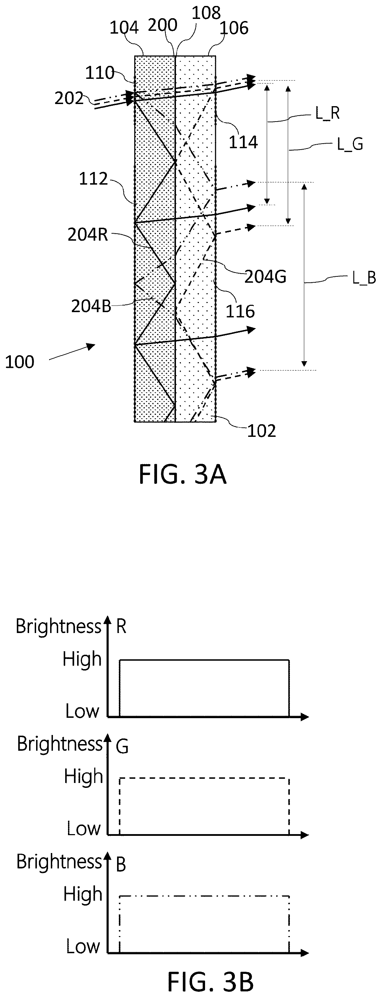

Figs. 3A and 3B show light paths through another example apparatus 100 for light of different wavelength ranges and plots of relative brightness levels for the respective different wavelength ranges.

The example apparatus 100 can comprise a first layer 104, second layer 106 and interface 108 with thin film 200 which can be as described above. Corresponding reference numerals are used for corresponding features.

In the example of Fig. 3A the light of the third wavelength range is in-coupled into the first layer 104 by the first incoupler 110. In this case the apparatus 100 is arranged to prevent early out-coupling of the light of the third wavelength range.

In this example the first outcoupler 112 is switchable. The first outcoupler 112 can comprise liquid crystal layers, or any other suitable means, that can be switched between an on state and off state in response to an applied voltage so as to enable the first outcoupler 112 to be switchable.

In this case an optical engine (not shown) provides the input light 202. The optical engine can be controlled so that the timing of the provision of the light of the respective wavelength ranges is synchronized with the switching of the first outcoupler 112. The switching of the first outcoupler 112 can be synchronized with the provision of the light of the third wavelength range so that the light of the third wavelength range does not meet the first outcoupler 112. This prevents the light of the third wavelength range from being out-coupled too early.

The expanders are not shown in Fig. 3A however the first expander provided in the first layer 104 could also be switchable and synchronized with the provision of the light of the third wavelength range. The switchable expander can also comprise liquid crystals or any other suitable means. The switchable expander can prevent the light of the third wavelength range from being incident on the expander of the first layer 104.

The total internal reflection lengths are also shown in Fig. 3A and these show that $L_R < L_G < L_B$

Fig. 3B shows the respective brightness levels for different wavelength ranges for the example apparatus shown in Fig. 3A. The first plot shows the brightness level for the first wavelength range, the second plot shows the brightness level for the second wavelength range, and the third plot shows the brightness level for the third wavelength range. For each of the wavelength ranges the brightness level is uniform or substantially uniform across the output.

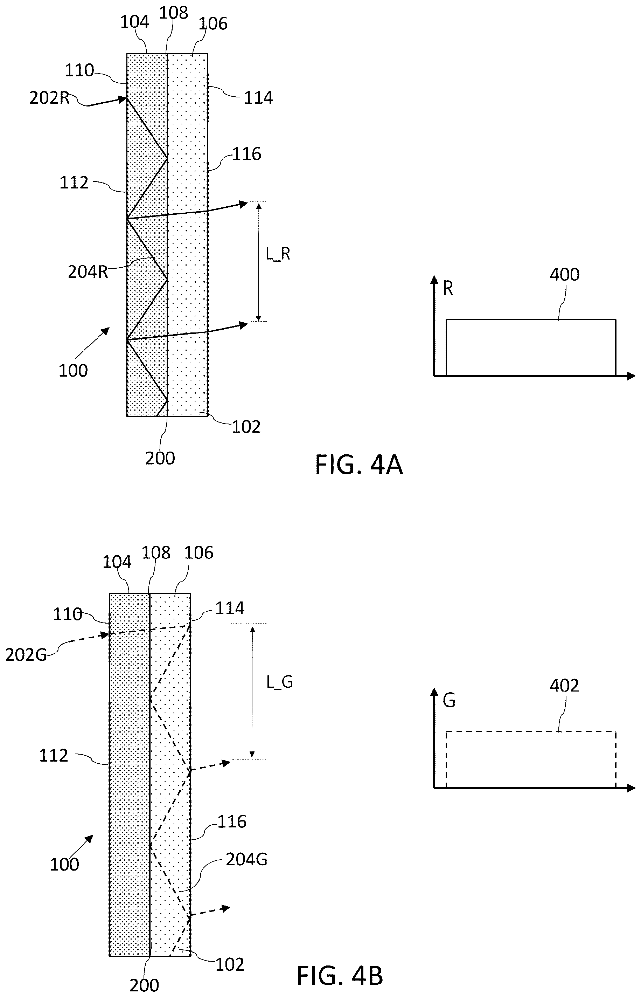

Figs. 4A to 4D show light paths through another example apparatus 100 for light of different wavelength ranges and plots of relative brightness levels for the respective different wavelength ranges.

The example apparatus 100 can comprise a first layer 104, second layer 106 and interface 108 with thin film 200 which can be as described above. Corresponding reference numerals are used for corresponding features.

In the examples of Figs. 4A to 4D the first outcoupler 112 and a first expander (not shown) can be switched between an on state and an off state. In this example the second incoupler 114 can also be switched between an on state and an off state. The switching of the second incoupler 114 and the first outcoupler 112 and the first expander is synchronized with the driving scheme of the optical engine (not shown).

An example driving scheme for the optical engine could be:
1. Red sequence (first wavelength of light): optical engine R ON, first expander and first outcoupler 112 ON, second incoupler 114 OFF
2. Green sequence (second wavelength of light): optical engine G ON, first expander and first outcoupler 112 OFF, second incoupler 114 ON
3. Blue sequence (third wavelength of light): optical engine B ON, first expander and first outcoupler 112 OFF, second incoupler 114 ON/OFF

The switchable components can comprise liquid crystals or any other suitable means.

Fig. 4A show the light paths for the red sequence. At this time the optical engine provides input light of the first wavelength range 202R. The light of the first wavelength range 202R is incoupled into the first layer 104 by the first incoupler 110. The in-coupled light of the first wavelength range 204R is reflected from the interface 108 and remains in the first layer 104. At this time the first expander and first outcoupler 112 are switched on and the in-coupled light of the first wavelength range 204R is out-coupled by the first outcoupler 112.

In the example driving scheme given above the second incoupler 114 is switched off when the optical engine provides input light of the first wavelength range 202R. However, as the in-coupled light of the first wavelength range 204R does not reach the second incoupler 114 the second incoupler 114 could be arranged in an on state at this time.

The plot 400 shows the relative brightness level for the first wavelength range. This shows that the brightness level is uniform or substantially uniform across the output.

Fig. 4B show the light paths for the green sequence. At this time the optical engine provides input light of the second wavelength range 202G. At this time the second incoupler 114 is switched on so that the light of the second wavelength range 202G is incoupled into the second layer 106 by the second incoupler 114.

The in-coupled light of the second wavelength range 204G is reflected from the interface 108 and remains in the second layer 106. At this time the first expander and first outcoupler 112 are switched off and the in-coupled light of the second wavelength range 204G is out-coupled by the second outcoupler 116.

In the example driving scheme given above the first expander and first outcoupler 112 are switched off when the optical engine provides input light of the second wavelength range 202G. However, as the in-coupled light of the second wavelength range 204G does not reach the first expander and first outcoupler 112 they could be arranged in an on state at this time.

The plot 402 shows the relative brightness level for the second wavelength range. This shows that the brightness level is uniform or substantially uniform across the output.

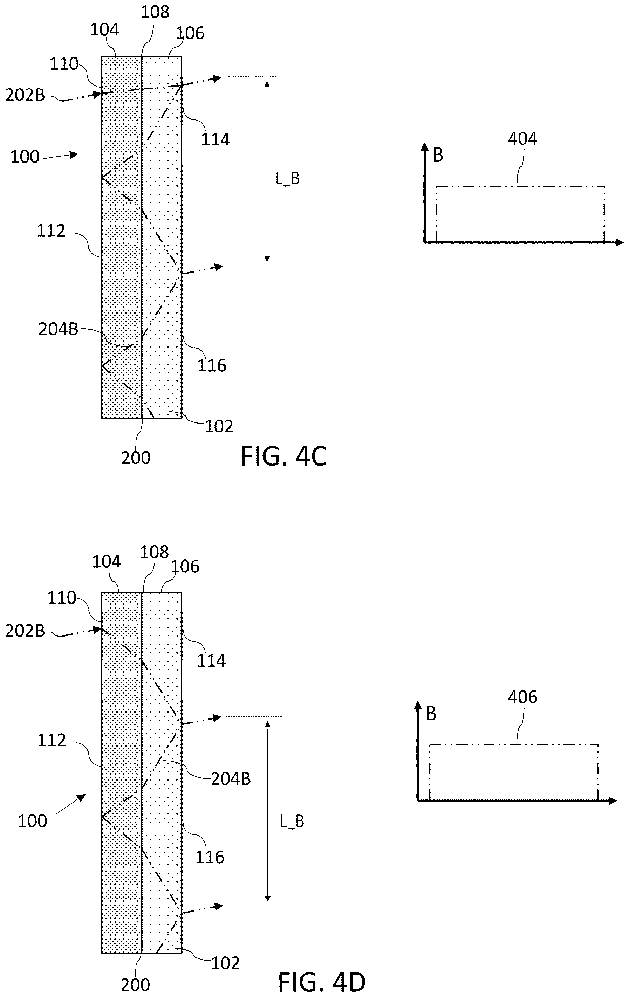

Figs. 4C and 4D show the light paths for the different options for the blue sequence. At this time the optical engine provides input light of the third wavelength range 202B. At this time the second incoupler 114 can be switched on as shown in Fig. 4C so that the light of the third wavelength range 202B is incoupled into the second layer 106 by the second incoupler 114. Alternatively at this time the second incoupler 114 can be switched off as shown in Fig. 4D so that the light of the third wavelength range 202B is incoupled into the first layer 104 by the first incoupler 110.

In the example of Fig. 4C the in-coupled light of the third wavelength range 204B passes through the interface 108 and is reflected from the surface of the first layer 104. At this time the first expander and first outcoupler 112 are switched off and the in-coupled light of the third wavelength range 204B is out-coupled by the second outcoupler 116.

In the example of Fig. 4D the in-coupled light of the third wavelength range 204B passes through the interface 108 and is reflected from the surface of the second layer 106. At this time the first expander and first outcoupler 112 are switched off and the in-coupled light of the third wavelength range 204B is out-coupled by the second outcoupler 116.

In the example driving scheme given above the first expander and first outcoupler 112 are switched off when the optical engine provides input light of the third wavelength range 202B. This prevents the early outcoupling of the light of the third wavelength range and helps to provide a more uniform brightness in the output.

The plot 404 shows the relative brightness level for the third wavelength range when the second incoupler 114 is switched on. The plot 406 shows the relative brightness level for the third wavelength range when the second incoupler 114 is switched off. These plots show that the brightness level can be uniform or substantially uniform across the output with the different arrangements of the apparatus 100.

In the examples of Figs. 4C and 4D the second incoupler 114 is either switched on or off. In some examples the second incoupler 114 could be partially switched on. Being able to arrange the second incoupler 114 in different states provides more variables for the design of the apparatus 100 and can enable appropriate total internal reflection lengths and brightness levels to be provided.

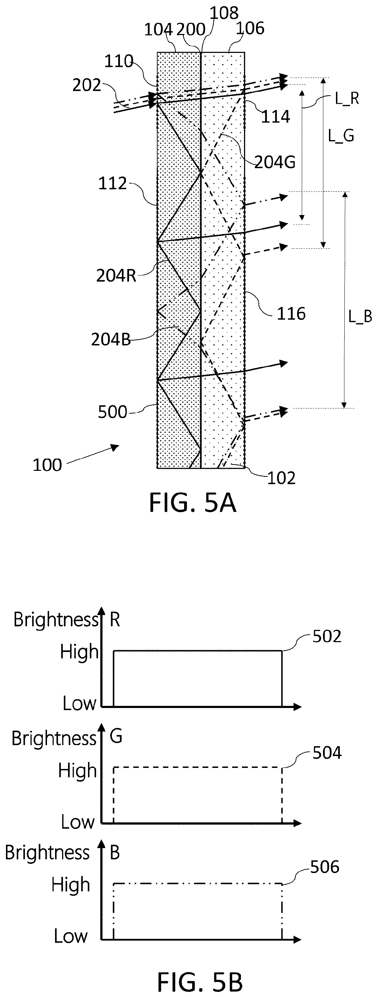

Figs. 5A and 5B show light paths through another example apparatus 100 for light of different wavelength ranges and plots of relative brightness levels for the respective different wavelength ranges.

The example apparatus 100 can comprise a first layer 104, second layer 106 and interface 108 with thin film 200 which can be as described above. Corresponding reference numerals are used for corresponding features.

In the example of Fig. 5A the apparatus 100 also comprises a dichroic reflector 500. The dichroic reflector 500 can be provided before the first outcoupler 112. In some examples the dichroic reflector 500 can also be provided before the first expander (not shown). The dichroic reflector 500 can be arranged to prevent light of the third wavelength range reaching the first outcoupler 112 and/or first expander.

In the example of Fig. 5A the light of the third wavelength range is in-coupled into the first layer 104 by the first incoupler 110. The dichroic reflector 500 is arranged to prevent the in-coupled light of the third wavelength range 204B reaching the first outcoupler 112. The dichroic reflector 500 therefore helps to prevent early out-coupling of the light of the third wavelength range.

Fig. 5B shows the respective brightness levels for different wavelength ranges for the example apparatus shown in Fig. 5A. The first plot 502 shows the brightness level for the first wavelength range, the second plot 504 shows the brightness level for the second wavelength range, and the third plot 506 shows the brightness level for the third wavelength range. For each of the wavelength ranges the brightness level is uniform or substantially uniform across the output.

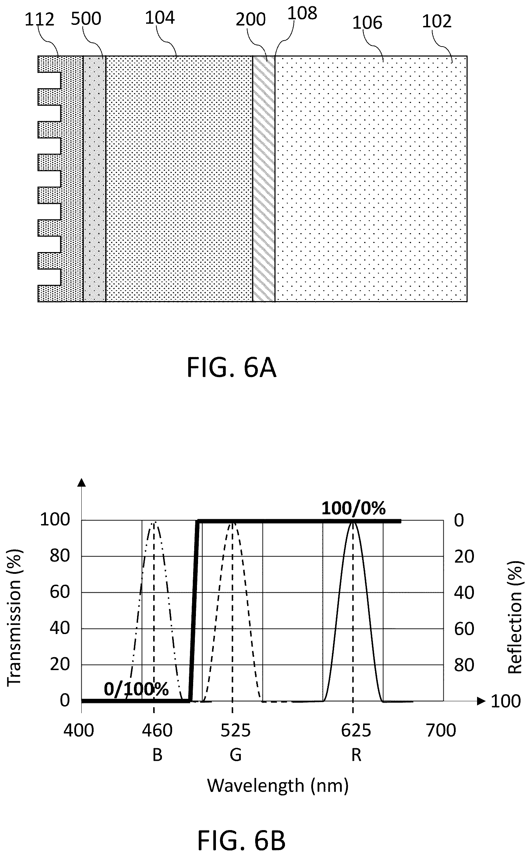

Figs. 6A and 6B show a cross section of part of an apparatus 100 comprising a dichroic reflector 500 and a transmission curve for a suitable type of dichroic reflector 500.

Fig. 6A shows a part of the apparatus 100 in which the first outcoupler 112 is provided. In this example the first outcoupler 112 comprises a diffractive grating. The first outcoupler 112 is provided on a surface of the first layer 104.

In the example of Fig. 6A the interface 108 comprises a thin film 200. The thin film 200 is positioned between the first layer 104 and the second layer 106. The thin film 200 can have a low refractive index. The refractive index of the thin film 200 can be low compared to the refractive index of the first layer 104 or the second layer 106. The thin film 200 can be configured to reflect in-coupled light of the first wavelength range 204R as it moves from the first layer 104 towards the second layer 106. The thin film 200 can be configured to reflect in-coupled light of the second wavelength range 204G as it moves from the second layer 106 towards the first layer 104. The thin film 200 can also be configured to allow in-coupled light of the third wavelength range 204B to pass through.

The dichroic material 500 is provided in front of the first outcoupler 112 so that in-coupled light of the first wavelength range 204R and in-coupled light of the third wavelength range 204B is incident on the dichroic material 500 before it is incident on the first outcoupler 112.

The dichroic material 500 can be arranged to provide full reflection for wavelengths below around 480nm. That is, the dichroic material 500 provides full reflection for light of the third wavelength range. For wavelengths above around 480nm (the first and second wavelength range) the dichroic material 500 provides full transmittance. An example of a transmission curve for a suitable dichroic material 500 is shown in Fig. 6B. This dichroic material 500 would reflect the in-coupled light of the third wavelength range 204B and prevent it from being outcoupled by the first outcoupler 112. However the dichroic material 500 would allow the in-coupled light of the first wavelength range 204R to pass through and enable this to be out-coupled by the first outcoupler 112.

Dichroic materials 500 with other transmission curves could be used in other examples. For instance, the in-coupled light of the second wavelength range 204G is blocked from reaching the first layer 104 by the thin film 200. Therefore the dichroic material 500 could have any properties in relation to the light in the second wavelength range.

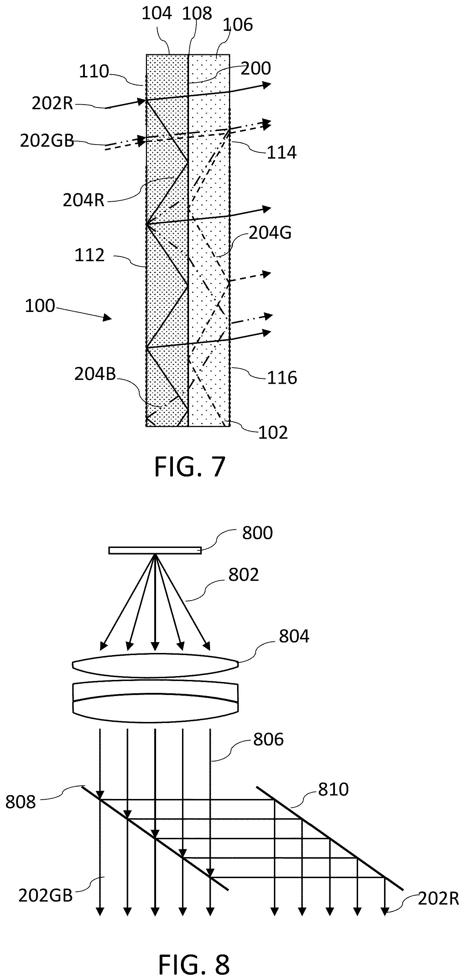

Fig. 7 shows light paths through another example apparatus 100 according to examples of the disclosure.

The example apparatus 100 can comprise a first layer 104, second layer 106 and interface 108 with thin film 200 which can be as described above. Corresponding reference numerals are used for corresponding features.

In the example of Fig. 7A the second incoupler 114 is displaced relative to the first incoupler 110 so that at least part of the second incoupler 114 does not overlap with the first incoupler 110.

In this example a first optical engine (not shown) can provide a first input beam of light 202R. In this example the first input beam of light 202R comprises light of the first wavelength range. The apparatus 100 and the optical engine can be arranged so that the first input beam of light 202R is incident on the first incoupler 110. This enables the light of the first wavelength range to be in-coupled by the first incoupler 110.

A second optical engine (also not shown) can provide a second input beam of light 202GB. In this example the second input beam of light 202GB comprises light of the second wavelength range and light of the third wavelength range. The apparatus 100 and the optical engine can be arranged so that the second input beam of light 202GB is incident on the second incoupler 114. This enables the light of the second wavelength range and light of the third wavelength range to be in-coupled by the second incoupler 114.

Having the second incoupler 114 displaced relative to the first incoupler 110 can improve the color separation between the first layer 104 and the second layer 106.

In the example of Fig. 7 two optical engines can be used to provide the two different input beams of light. In other examples a single optical engine could be used and the output of the single optical engine could be split into two or more beams.

Fig. 8 shows an example arrangement that can be used to split a beam of light from a single optical engine 800. In this example the optical engine 800 provides an output 802. The output comprises light of the first wavelength range, the second wavelength range, and the third wavelength range.

The output 802 is incident on one or more lenses 804. The lenses 804 can be arranged to collimate the output 802 to provide collimated light 806. Other optical components could be used instead of, or in addition to, the lenses in other examples of the disclosure. The collimated light 806 comprises light of the first wavelength range, the second wavelength range, and the third wavelength range.

The collimated light 806 is incident on a dichroic reflector 808. The dichroic reflector 808 is arranged to split the collimated light 806. In this example the collimated light 806 reflect the light of the first wavelength range and allows light of the second wavelength range and light of the third wavelength range to pass through.

The light of the first wavelength range that is reflected by the dichroic reflector 808 can then be reflected by a reflector 810 so as to provide a first input beam of light 202R.

The light of the second wavelength range and light of the third wavelength range that passes through the dichroic reflector provides a second input beam of light 202GB. The second input beam of light 202GB is displaced relative to the first input beam of light 202R.

In some examples the apparatus 100 could be provided with variations that are not shown in the Figs. For instance, in some examples the second incoupler 114 can have a different orientation compared to the first incoupler 110. Similarly the second outcoupler 116 can have a different orientation compared to the first outcoupler 112 and the second expander can have a different orientation compared to the first expander. For instance, the gratings used in the second layer 106 could be perpendicular, or substantially perpendicular, to the gratings used in the first layer 104. As a result of this light that is in-coupled by the first incoupler 110 would only interact with other gratings in the first layer 104 and light that is in-coupled by the second incoupler 114 would only interact with other gratings in the second layer 106. Such arrangements could improve the color separation between the respective layers 104, 106.

In the examples shown in Figs. 1 to 8 the gratings of the incouplers 110, 114 and outcouplers 112, 116 and expanders are provided on surfaces of the layers 104, 106. In other examples some, or all of, the gratings of the incouplers 110, 114 and outcoupler 112, 116 and expanders can be provided inside of the stack of layers 104, 106. This arrangement can help to protect the surfaces of the gratings. The spaces between the lines of pillars of the gratings could be filled with a material with a very low refractive index. A very low refractive index could be around 1.1 or 1.2.

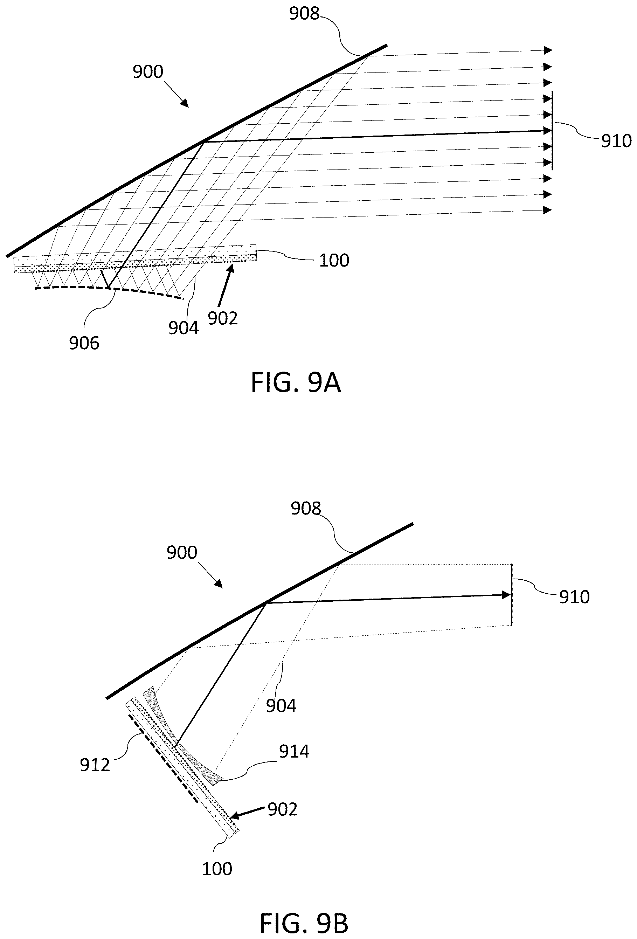

Figs. 9A and 9B show example head up displays (HUDs) 900 comprising an apparatus 100.The HUDs 900 could be provided in a vehicle such as a terrestrial vehicle, an aerial vehicle, an aquatic vehicle or any other suitable type of vehicle.

The HUDs 900 comprise an image source 902 and an apparatus 100. The image source 902 can be an optical engine. The apparatus 100 can be as described herein. The incouplers 110, 114 and outcouplers 112, 116 used in the example apparatus 100 of Figs. 9A and 9B can be transmissive. In other examples reflective incouplers 110, 114 and/or outcouplers 112, 116 could be used. The image source 902 is positioned to provide an input beam of light to the apparatus 100. The apparatus 100 is configured to expand the input beam of light and provide an expanded beam of light 904 as an output.

In the example of Fig. 9A the expanded beam of light 904 is directed towards a compensation mirror 906 and reflected from the compensation mirror 906 towards a windshield 908. The compensation mirror 906 and/or layers 104, 106 of the apparatus 100 can be curved or partially curved to compensate for curvature of the windshield 908.

The expanded beam of light 904 is reflected from the windshield 908 towards a user (not shown). The expanded beam of light 904 comprises an expanded exit pupil 910. The expanded exit pupil 910 can be directed towards the line of sight of a user of the vehicle.

In the example of Fig. 9B the apparatus 100 is arranged in a different configuration. In this configuration the expanded beam of light 904 from the apparatus 100 is directed towards a recycling mirror 912 and reflected from the recycling mirror 912 through a compensation lens 914 towards a windshield 908. The compensation lens 914 and/or layers 104, 106 of the apparatus 100 can be curved or partially curved to compensate for curvature of the windshield 908.

The expanded beam of light 904 is reflected from the windshield 908 towards a user (not shown). The expanded beam of light 904 comprises an expanded exit pupil 910. The expanded exit pupil 910 can be directed towards the line of sight of a user of the vehicle.

In the examples of Figs. 9A and 9B the expanded beam of light 904 is reflected back through the light guide 102 from the compensation mirror 906 or the recycling mirror 912. Some of this light might be reflected back towards the compensation mirror 906 or the recycling mirror 912 from the interface 108 between the layers 104, 106 of the apparatus 100. The light that is reflected back can be reduced through the selection of appropriate properties of any thin films 200 or other means used in the interface 108.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: " and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

As used herein, the terms "the at least one" and "the one or more" mean "any one of the at least one" and "any one of the one or mor" respectively.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. An apparatus comprising:
a light guide, the light guide comprising at least a first layer and a second layer and an interface between the first layer and the second layer wherein;
the first layer of the light guide comprises a first incoupler configured to in-couple one or more input beams of light of a first wavelength range into the first layer and a first outcoupler configured to out-couple the one or more input beams of light of the first wavelength range from the light guide;
the second layer of the light guide comprises a second incoupler configured to in-couple one or more input beams of light of a second wavelength range into the second layer and a second outcoupler configured to out-couple the one or more input beams of light of the second wavelength range from the light guide; and
the interface between the first layer and the second layer is arranged to retain light of the first wavelength range in the first layer and to retain light of the second wavelength range in the second layer and to allow light of a third wavelength range to pass through the interface and travel through both the first layer and the second layer.

2. The apparatus as claimed in claim 1 wherein the first incoupler is configured to in-couple one or more input beams of light of the third wavelength range into the first layer.

3. The apparatus as claimed in any preceding claim wherein the second incoupler is configured to in-couple one or more input beams of light of the third wavelength range into the second layer.

4. The apparatus as claimed in any preceding claim wherein the second incoupler is switchable between an on state and off state wherein in the on state the second incoupler is configured to in-couple one or more input beams of light of the third wavelength range into the second layer and in the off state the second incoupler is not configured to in-couple one or more input beams of light of the third wavelength range into the second layer.

5. The apparatus as claimed in any preceding claim wherein the first incoupler is switchable between an on state and off state wherein in the on state the first incoupler is configured to in-couple one or more input beams of light of the third wavelength range into the first layer and in the off state the first incoupler is not configured to in-couple one or more input beams of light of the third wavelength range into the first layer.

6. The apparatus as claimed in any of claims 2 to 5 wherein the second outcoupler is configured to out-couple one or more input beams of light of the third wavelength range from the light guide.

7. The apparatus as claimed in any of claims 2 to 6 wherein dichroic reflector material is provided before the first outcoupler to reflect light of the third wavelength range.

8. The apparatus as claimed in any preceding claim wherein the interface comprises a thin film with a refractive index that is lower than the refractive index of the first layer and the refractive index of the second layer.

9. The apparatus as claimed in claim 8 wherein the thin film is arranged, for light travelling from the first layer towards the second layer, to reflect light of the first wavelength range and first reflection angle and allow light of the second wavelength range and second reflection angle to pass through and the thin film is arranged, for light travelling from the second layer towards the first layer, to reflect light of the second wavelength range and second reflection angle.

10. The apparatus as claimed in claim 9 wherein the thin film is arranged, for light travelling from the first layer towards the second layer, to allow light of the third wavelength range and third reflection angle to pass through and for light travelling from the second layer towards the first layer, to allow light of the third wavelength range and third reflection angle to pass through.

11. The apparatus as claimed in any preceding claim wherein the second incoupler is displaced relative to the first incoupler so that at least part of the second incoupler does not overlap with the first incoupler.

12. The apparatus as claimed in any preceding claim wherein the first layer comprises a first expander between the first incoupler and the first outcoupler where the first expander is configured to expand one or more incoupled beams of light of the first wavelength range and the second layer comprises a second expander between the second incoupler and the second outcoupler where the second expander is configured to expand one or more incoupled beams of light of the second wavelength range.

13. The apparatus as claimed in claim 12 wherein the second expander is configured to expand one or more incoupled beams of light of the third wavelength range.

14. The apparatus as claimed in any preceding claim wherein wavelengths in the second wavelength range are shorter than the wavelengths in the first wavelength range, or/and wavelengths in the third wavelength range are shorter than the wavelengths in the second wavelength range.

15. A module, a device, a headset, a vehicle or cab for a vehicle comprising an apparatus as claimed in any preceding claim.
